# EUROPEAN PATENT SPECIFICATION

(11) **EP 1 857 334 B1**
(45) Date of publication and mention of the grant of the patent: **01.10.2014**
(21) Application number: 07007877.9
(22) Date of filing: 18.04.2007
(51) Int. Cl.: B60R 21/26

(54) **Ignitor, inflator, and airbag apparatus**
Zünder, Gasgenerator und Airbagvorrichtung
Allumeur, gonfleur et appareil d'airbag

(30) Priority: 16.05.2006 JP 2006136632
(43) Date of publication of application: 21.11.2007
(73) Proprietor: TAKATA CORPORATION, Minato-ku, Tokyo 106-8510 (JP)
(72) Inventor: Takimoto, Takayuki, Tokyo 106-8510 (JP)
(74) Representative: Banzer, Hans-Jörg

(56) References cited:
- EP-A1- 0 029 672
- EP-A2- 0 512 682
- DE-A1- 10 103 110
- DE-C1- 10 225 384
- US-A- 3 971 320
- US-A- 5 140 906
- US-A1- 2001 002 085
- US-B1- 6 324 987

## Description

The present invention relates to an initiator in which a harness for distributing power is connected to an initiator main body via a connecting member such as an electrode, a connector, or the like, and more specifically, it relates to an initiator having a good waterproofing property of a connecting portion for connecting the initiator main body and the harness. Further, the present invention relates to an inflator provided with the initiator, and an airbag apparatus provided with the inflator.

An airbag apparatus mounted on a motor vehicle or the like is provided with an airbag inflated by gas that is supplied into the same, and an inflator for supplying the gas into the airbag. The inflator is provided with gas-generating agent and an initiator for initiating a gas-generating reaction of the gas-generating agent.

The initiator is provided with reaction agent, an ignition device for starting reaction of the reaction agent, and a harness for distributing power to the ignition device.

By distributing the power to the ignition device via the harness, the reaction agent is ignited resulting in generating high-temperature reaction gas, and the gas-generating agent in the inflator starts the gas-generating reaction by the reaction gas. Thereby, a large amount of gas is generated from the inflator, and the airbag is inflated by the gas.

EP 0 029 672 A1, which serves as basis for the preamble of claim 1, discloses a safety initiator, in which connections of connectors extending from wires and of leads extending from the initiator are located in a casing sealed with sealing material.

US 3,971,320 discloses an electric initiator, in which a lead wire is connected to an initiator pin within a cup-shaped case, the open end of which is sealed with sealing material.

As a connecting structure for connecting the harness to an initiator main body, generally an electrode pin, which is conducted to the ignition device, is extended from the initiator main body, and the harness is connected to the electrode pin (refer to, for example, Japanese Unexamined Patent Application Publication No. 2002-90097). In this case, a connector is provided at a tip end of the harness, and the harness is connected to the electrode pin in a manner so as to insert the electrode pin into the connector.

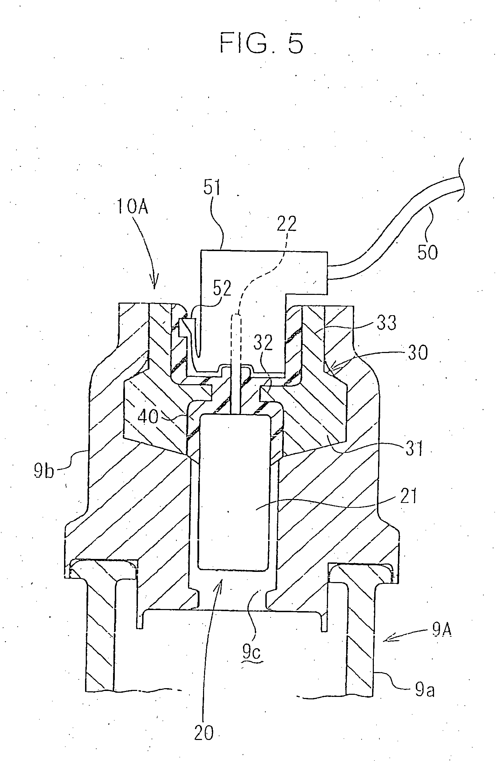

An example of such an initiator will be explained more in detail with reference to Fig. 5. Incidentally, Fig. 5 is a longitudinal cross-sectional view illustrating an initiator and a vicinity of an initiator-attaching portion of the inflator provided with the initiator according to a hitherto known example, in which a condition where the initiator is attached to the inflator, is shown.

An initiator 10A is provided with an initiator main body 20, an approximately cylindrically shaped collar 30 that holds the initiator main body 20, a resin 40 that joins the initiator main body 20 with the collar 30, a harness 50 that distributes the power to the initiator main body 20, and so forth.

The initiator main body 20 is provided with a head portion 21 housing the reaction agent and the ignition device (both of which are not shown) inside thereof, and an electrode pin 22 extending from the head portion 21. The electrode pin 22 is conducted to the ignition device in the head portion 21.

The collar 30 is provided with a main body 31 having a cylindrical shape, an inwardly protruding flange portion 32 that is circumferentially formed on an inner peripheral surface of the main body 31, and a cylindrically shaped surrounding wall portion 33 extending from one end side (rear end side) of the main body 31. A diameter of an outer circumference of the main body 31 is formed to be greater than that of the surrounding wall portion 33.

The initiator main body 20 is disposed in the main body 31, and the electrode pin 22 is extending in the surrounding wall portion 33, while passing through an inner hole of the inwardly protruding flange portion 32. The resin 40 is filled up between the initiator main body 20 and the inner peripheral surface of the main body 31, and an inside of the inner hole of the inwardly protruding flange portion 32 by an injection molding process or the like. The resin 40 is then hardened and the initiator main body 20 and the collar 30 are joined by the hardened resin 40.

A connector 51 is provided at a tip end of the harness 50, and the connector 51 is connected to the electrode pin 22 in a manner so as to insert a tip end side of the connector 51 into an inside of the surrounding wall portion 33. That is, in this hitherto known example, a connecting member for connecting the initiator main body 20 and the harness 50 is constructed with the electrode pin 22 and the connector 51.

A numeral 52 denotes a claw for preventing the connector 51 from being pulled out, and the connector 51 is prevented from being pulled out from the electrode 22 in that the claw 52 is latched to a groove (numeral is omitted) formed in an inner peripheral surface of the surrounding wall portion 33.

The initiator 10A is attached to an inflator 9A.

In the hitherto known example, the inflator 9A is formed into a rod shape, and is provided with a cylindrically shaped housing 9a housing the gas-generating agent (not shown). At one end side (rear end side) of a center axis direction of the housing 9a, an initiator-attaching portion 9b is provided. The initiator-attaching portion 9b has approximately cylindrical shape having an inner hole 9c that is allowed to communicate with an internal space of the housing 9a. At the other end side (tip end side) of the housing 9a, a gas outlet (not shown) is provided.

The initiator 10A is inserted into the inner hole 9c of the initiator-attaching portion 9b, with a head portion 21 in the lead. In addition, a rear end side of the initiator-attaching portion 9b is crimped and is brought to be in close contact with an outer peripheral surface of the collar 30. Thereby, the initiator 10A is fixed in the initiator-attaching portion 9b and the rear end side of the initiator-attaching portion 9b is tightly sealed.

When the power is distributed to the ignition device via the harness 50, the connector 51 and the electrode pin 22, an operation of the ignition device is started resulting in igniting the reaction agent. Thus, a high-temperature reaction gas is generated. The reaction gas flows into the housing 9a passing through the inner hole 9c of the initiator-attaching portion 9b after rupturing the head portion 21. Thereby, the reaction gas is caused to be in contact with the gas-generating agent in the housing 9a, and the gas-generating reaction is started.

An object of the present invention is to provide an initiator having a good waterproofing property of a connecting portion of an initiator main body and a harness in the initiator, in which a harness for distributing power is connected to the initiator main body via a connecting member such as an electrode, a connector, or the like, and to provide an inflator including the initiator, and an airbag apparatus.

According to the present invention, this object is achieved by an initiator as defined by Claim 1. The dependent claims defined preferred or advantageous embodiments of the invention.

An initiator according to the invention, in which a harness for distributing power is connected to an initiator main body via a connecting member, includes a sealing portion for covering at least a joining portion of the connecting member and the initiator main body.

In the initiator, at least the joining portion of the connecting member and the initiator main body, and a joining portion of the connecting member and the harness may be covered with the sealing portion.

In the initiator, the connecting member comprises an electrode provided in the initiator main body and a connector in which the harness is continuing, and the connector is joined to the electrode, and the sealing portion is provided in a manner so as to cover at least a space between the connector and the initiator main body.

In the initiator, the sealing portion may be provided to cover at least a space between the connector and the initiator main body, and the joining portion of the connector and the harness.

A cylindrically shaped cap is provided in a manner so as to surround the joined electrode and the connector, and the sealing portion is provided at an inside of the cap.

In the initiator, a hooking portion, in which a halfway portion in an extending direction of the harness may be hooked, may be provided on the cap.

An inflator according to the invention is provided with the initiator according to any one aspect or embodiment of the invention.

An airbag apparatus according to the invention is provided with an airbag and an inflator for inflating the airbag, the inflator being the inflator according to the invention.

In an initiator according to the present invention, at least a joining portion of the initiator main body and the connecting member in a connecting portion of an initiator main body and a harness for distributing power which are connected via a connecting member, is covered with a sealing portion, and therefore a waterproofing property of the connecting portion of the initiator main body and the harness for distributing power is good.

In this case, by further covering at least a joining portion of the harness and the connecting member with the sealing portion, the waterproofing property of the connecting portion of the initiator main body and the harness for distributing power may be further improved.

As the connecting member comprises an electrode provided in the initiator main body and a connector continuing into the harness, and the connecting member is provided with a structure in which the connector is joined to the electrode, the good waterproofing property can be obtained in that a sealing portion is provided in a manner so as to cover at least a space between the connector and the initiator main body.

In this case, the waterproofing property may be further improved in that at least the joining portion of the connector and the harness is covered with the sealing portion.

A protecting effect of the sealing portion and a joining portion of the electrode and the connector is improved in that a cylindrically shaped cap is provided in a manner so as to surround the joined electrode and the connector, and that the sealing portion is provided at an inside of the cap.

When tensile force is exerted on the harness, the tensile force is brought to be hardly transmitted to a portion in the harness which is covered with the sealing portion in the cap by providing a hooking portion on the cap and hooking the harness onto the hooking portion. Therefore, the harness can be prevented from being peeled off from the sealing portion, or the sealing portion can be prevented from being ruptured by the tensile force.

As described above, since the waterproofing property of the connecting portion of the initiator main body and the harness for distributing power is good, the initiator in the present invention is preferable to be an initiator for an inflator mounted on an airbag apparatus for protecting a pedestrian or the like (hereinafter sometimes called an airbag apparatus for pedestrian, for brevity) that protects a pedestrian or the like by inflating an airbag toward an outer surface of the vehicle body when, for example, a motor vehicle collides with the pedestrian or the like (or when the collision is predicted).

Ordinarily, the airbag apparatus for protecting a pedestrian or the like is installed outside a vehicle interior. The airbag apparatus for protecting a pedestrian or the like on which the inflator with the initiator of the present invention is mounted has good waterproofing property in the connecting portion of the initiator main body and the harness, and an intrusion of rain water or the like in the connecting portion is prevented. Accordingly, the airbag apparatus of the present invention has high weatherability.

However, the airbag apparatus in the present invention is not limited to the airbag apparatus for protecting a pedestrian or the like, and the present invention can be applied to airbag apparatuses for various uses other than the above-described.

Hereinbelow, an embodiment of the present invention will be explained with reference to the drawings.
Fig. 1 is a perspective view illustrating an initiator and a vicinity of an initiator-attaching portion of an inflator provided with the initiator according to an embodiment;
Fig. 2 is a cross-sectional view along a line II-II of Fig. 1;
Fig. 3 is a perspective view illustrating an automobile, on which an airbag apparatus for protecting a pedestrian is mounted, according to the embodiment;
Fig. 4 is a plan view illustrating the airbag apparatus for protecting a pedestrian, in Fig. 3;
Fig. 5 is a perspective view illustrating a hitherto known initiator and a vicinity of an initiator-attaching portion of an inflator provided with the initiator; and
Fig. 6 is a cross-sectional view illustrating an initiator and a vicinity of an initiator-attaching portion of an inflator provided with the initiator according to another embodiment.

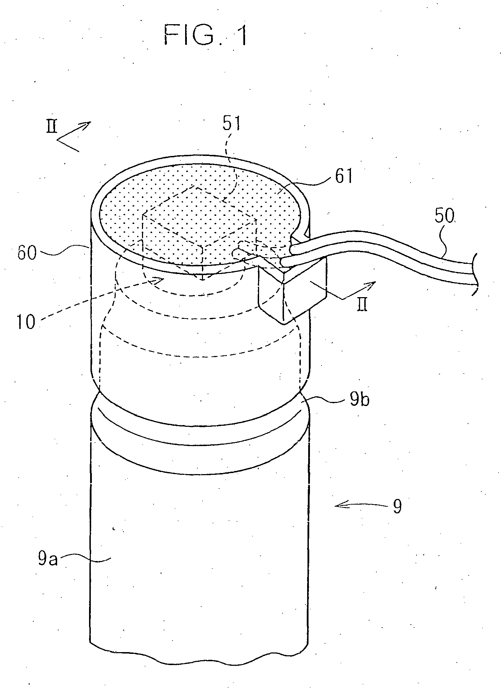

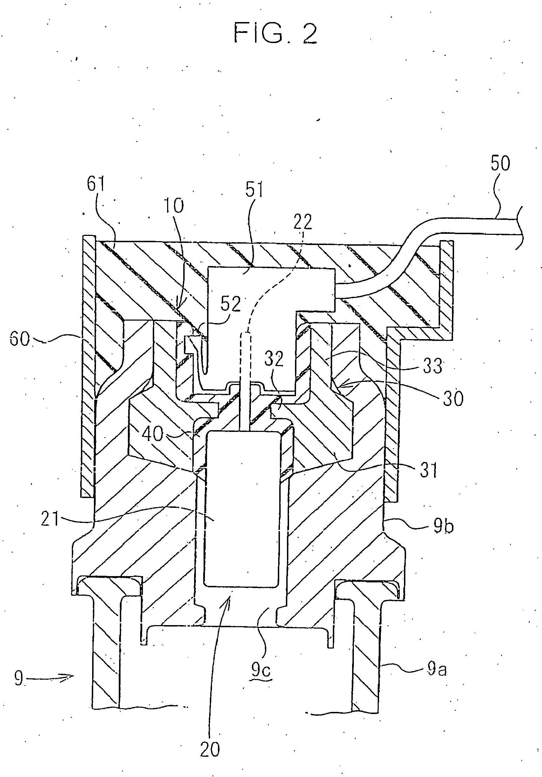

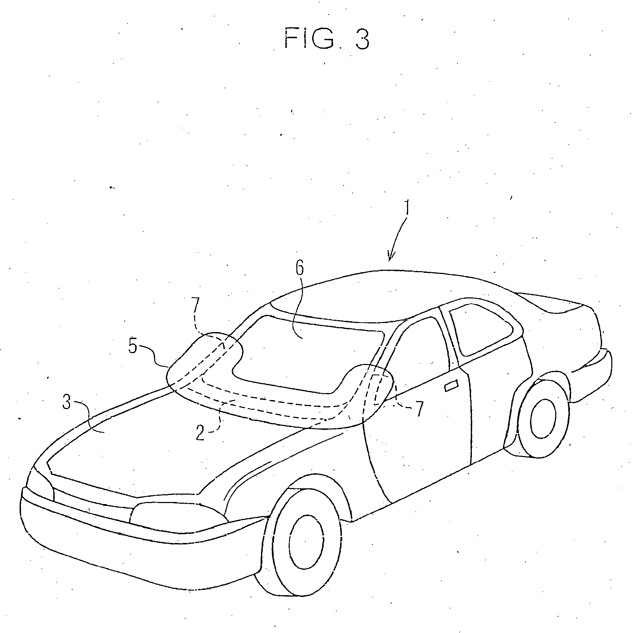

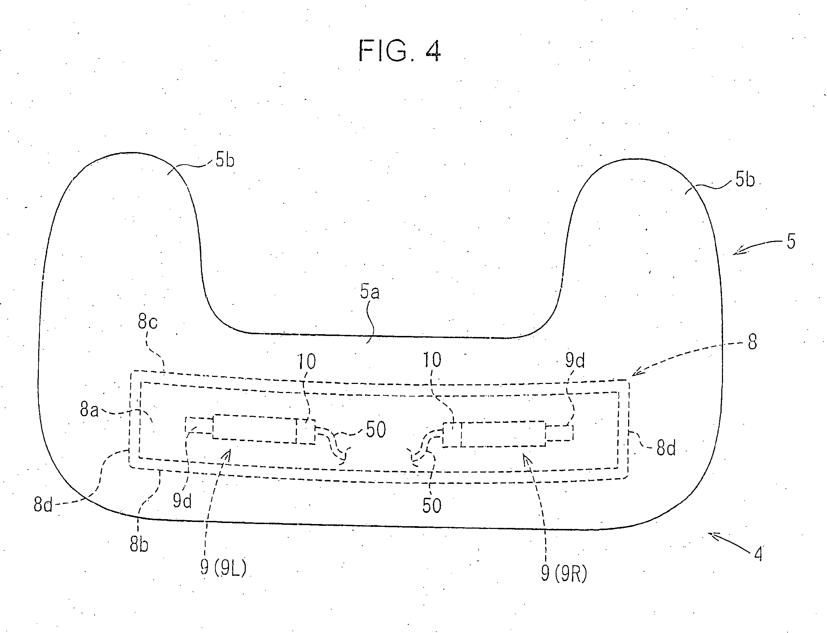

Incidentally, Figs. 1 and 2 illustrate a condition in which the initiator is attached to the inflator. In addition, Figs. 3 and 4 illustrate a condition in which the airbag is inflated.

In the explanation given below, a tip-and-rear direction of the initiator corresponds to an upper and lower direction of Figs. 1 and 2, and an inflator side of the initiator, i.e., a lower side of Figs. 1 and 2 is defined as a tip end, and a side opposite to the inflator side of the initiator, i.e., an upper side of Figs. 1 and 2 is defined as a rear end.

Referring to Figs. 1 and 2, an initiator 10 according to the embodiment is provided with an initiator main body 20, an approximately cylindrically shaped collar 30 that holds the initiator main body 20, a resin 40 that joins the initiator main body 20 with the collar 30, a harness 50 that distributes power to the initiator main body 20, a sealing portion 61 that covers a connecting portion for connecting the initiator main body 20 and the harness 50, and so forth.

A construction of the initiator main body 20, the collar 30, the resin 40, the harness 50, and the connecting portion for connecting the initiator main body 20 and the harness 50, in the initiator 10 is identical of that of the initiator 10A in Fig. 5, described above.

Namely, in this embodiment, the initiator main body 20 includes the head portion 21 housing a reaction agent and an ignition device (both of which are not shown) inside thereof, and the electrode pin 22 that is extending from the head portion 21 and is conducting to the ignition device in the head portion 21, as well. The initiator main body 20 is disposed in a main body 31 of the collar 30. The electrode pin 22 is extending out inside a surrounding wall portion 33 of a rear end side of the main body 31 while passing through an inner hole of an inwardly protruding flange portion 32 that is circumferentially formed in the main body 31. The resin 40 is filled up between the initiator main body 20 and the inner peripheral surface of the main body 31, and an inside of the inner hole of the inwardly protruding flange portion 32 by an injection molding process or the like. The resin 40 is then hardened and the initiator main body 20 and the collar 30 are joined by the hardened resin 40.

Further, a connector 51 is provided at a tip end of the harness 50, and the connector 51 is connected to the electrode pin 22 in a manner so as to insert a tip end side of the connector 51 into an inside of the surrounding wall portion 33. That is, in this embodiment, a connecting member for connecting the initiator main body 20 and the harness 50 is constructed with the electrode pin 22 and the connector 51.

In this embodiment, the initiator 10 is also attached to the rod-shaped inflator 9. A construction of the inflator 9 is identical to the one of the inflator 9A, shown in Fig. 5, as described above. Furthermore, an attaching structure of the initiator 10 to the inflator 9 is also identical of the attaching structure of the initiator 10A to the inflator 9A, shown in Fig. 5.

Namely, the inflator 9 also includes a cylindrically shaped housing 9a that houses a gas-generating agent (not shown). The initiator-attaching portion 9b having approximately cylindrical shape including an inner hole 9c that is allowed to communicate with an internal space of the housing 9a is provided at one end side (rear end side) in a center axis direction of the housing 9a. At the other end side (tip end side) of the housing 9a, a gas outlet 9d (shown in Fig. 4) is provided.

The initiator 10 is inserted into the inner hole 9c of the initiator-attaching portion 9b, with the head portion 21 in the lead. In addition, a rear end side of the initiator-attaching portion 9b is crimped and is brought to be in close contact with the outer peripheral surface of the collar 30. Thereby, the initiator 10 is fixed in the initiator-attaching portion 9b and the rear end side of the initiator-attaching portion 9b is tightly sealed.

In this embodiment, a cap 60 having approximately cylindrical shape is mounted at a rear end side of the initiator 10. A sealing portion 61 that covers a joining body of the electrode pin 22 and the connector 51, as a connecting portion for connecting the initiator main body 20 and the harness 50, is formed by filling up a potting material in the cap 60.

Incidentally, as shown in Fig. 2, in this embodiment, a tip end side of the cap 60 is fitted on the outer side of the initiator-attaching portion 9b, and the potting material is also filled up between an inner peripheral surface of the cap 60 and an outer peripheral surface of the initiator-attaching portion 9b, resulting in forming the sealing portion 61. Further, the potting material is also filled between an inner peripheral surface of the surrounding wall portion 33 and the connector 51.

In this embodiment, the entire connector 51 is buried in the sealing portion 61, and the harness 50 connected to the connector 51 is pulled out from an inside of the sealing portion 61. However, it is sufficient for the sealing portion 61 to cover at least a space between the connector 51 and the inner peripheral surface of the surrounding wall portion 33, and preferably, to further cover a joining portion of the connector 51 and the harness 50 (a base portion of the harness 50 to the connector 51), as described later.

As for the potting material constituting the sealing portion 61, although a urethane resin or the like is quoted, the potting material is not limited to the same. Further, as for a material of the cap 60, a PBT or the like is quoted because of good joining characteristic of the same with the potting material. However, the material of the cap 60 is not limited to the above-described.

Other construction of the initiator 10 and the inflator 9 provided with the initiator 10 is identical of that of the initiator 10A and the inflator 9A, shown in Fig. 5, described earlier, and an explanation is omitted by using the same numerals as in Fig. 5 to refer to the same elements in Figs. 1 and 2.

When the power is distributed to the ignition device via the harness 50, the connector 51, and the electrode pin 22, an operation of the ignition device is started resulting in igniting the reaction agent, and thus, a high-temperature reaction gas is generated. The reaction gas flows into the housing 9a passing through the inner hole 9c of the initiator-attaching portion 9b after rupturing the head portion 21. Thereby, the reaction gas is caused to be in contact with the gas-generating agent in the housing 9a, and the gas-generating reaction is started. Further, the gas generated by the gas generating reaction is blown out from the gas outlet 9d at the tip end side of the inflator 9. Hereinbelow, an operation from a starting motion of the power distribution to the initiator 10 (ignition device) to a blowing-out motion of the gas from the gas outlet 9d is called as gas blowing-out operation of the inflator 9.

In this initiator 10, since the joining body of the electrode pin 22 and the connector 51 as the connecting member for connecting the initiator main body 20 and the harness 50 is covered with the sealing portion 61, a waterproofing property between the electrode pin 22 and the connector 51 is good.

Specifically, in this embodiment, the waterproofing property is high because the entire connector 51 is buried in the sealing portion 61.

In this embodiment, a cylindrically shaped cap 60 is provided in a manner so as to surround the joining body of the electrode pin 22 and the connector 51, and the sealing portion 61 is formed by filling up the potting material so as to bury the connector 51 at an inside of the cap 60. Therefore, a protecting effect for the sealing member 61 and the joining body of the electrode pin 22 and the connector 51 is high. Furthermore, by this construction, a waterproof treatment at high effect can easily be performed.

In this embodiment, the inflator 9 is mounted on an airbag apparatus 4 for protecting a pedestrian.

As shown in Fig. 3, in this embodiment, an automobile 1 on which the airbag apparatus 4 for protecting a pedestrian is mounted is a four-door sedan. However, the present invention is not limited to a specific motor vehicle configuration. The airbag apparatus 4 is installed at a rear part of a hood 3. As shown in the drawing, when the airbag 5 of the airbag apparatus 4 for protecting a pedestrian is inflated, at least one portion of a rear edge portion of the hood 3, a cowl louver 2, a windshield 6, and left and right A-pillars 7 is covered with the airbag 5.

Incidentally, the airbag 5 is formed into approximately U-shape and is provided with a cowl-covering portion 5a that covers the cowl louver 2 and a lower part of the windshield 6, and pillar covering portions 5b and 5b, which are continuing into both left and right end sides of the cowl-covering portion 5a, and are covering at least a lower end side of each of the A-pillars 7, while developing along the left and right A-pillars 7. However, a developing shape of the airbag is not limited to the above-described. For example, the airbag 5 may have approximately rectangular shape covering approximately entire body over the cowl louver 2, the windshield 6, and the A-pillars 7. Alternatively, the airbag 5 may have approximately H-shape or the like including a pair of fender-covering portions extending frontward in a manner so as to cover over the left and right end sides of the cowl-covering portion 5a, and left and right fender portions.

The airbag apparatus 4 for protecting a pedestrian is provided with a case 8 for housing a folded airbag 5, the inflator 9 (9L and 9R) for inflating the airbag 5, a lid (not shown) that closes an opening of the hood 3 (not shown) for allowing the airbag to pass therethrough (hereinafter referred to as "airbag-passing opening"), or the like.

The case 8 has a long box shape extending in a vehicle body width direction. The case 8 is provided with a bottom portion 8a, a front wall portion 8b, a rear wall portion 8c, and left and right end walls 8d and 8d, and a top surface thereof is open. The case 8 is disposed at a backside of the hood 3 so that a top surface opening portion thereof faces the airbag-passing opening, and is attached to the hood 3 via a bracket (not shown).

In this case 8, the folded body of the airbag 5 is disposed from one end side to the other end side in a longitudinal direction of the case 8.

In this embodiment, as shown in Fig. 4, inflators 9 (9L and 9R) are installed at both end sides in a longitudinal direction of the case 8, respectively. The inflator 9L positioned at a left end side of the case 8 is arranged at a left half side of the cowl-covering portion 5a of the airbag 5. The inflator 9R positioned at a right end side of the case 8 is arranged at a right half side of the cowl-covering portion 5a. As shown in the drawing, a longitudinal direction of each of the inflators 9L and 9R conforms to the longitudinal direction of the case 8, and each of the inflators 9L and 9R is disposed in a manner such that each of tip end (gas outlet 9d) sides thereof faces both ends in the longitudinal direction of the case 8.

However, the arrangement of the inflator 9 is not limited to the above-described.

The harness 50 extending out from the initiator 10 of each of the inflators 9 is pulled out from the airbag 5, respectively, and is connected to a control circuit (not shown) of the airbag apparatus 4 for protecting a pedestrian.

Although not shown, in the automobile 1 where the airbag apparatus 4 for protecting a pedestrian is mounted, various sensors for detecting that the automobile 1 has collided against a pedestrian or the like, or for predicting that the automobile 1 will collide against the pedestrian or the like are provided. (Incidentally, both the detecting sensor and the predicting sensor may be provided.) The control circuit distributes power to the initiator 10 (ignition device) of each of the inflators 9 via the harness 50, on the basis of a detecting signal or a predicting signal from these sensors.

Operation of the airbag apparatus 4 for protecting a pedestrian having such a construction is as follows.

In a case that a collision of the automobile 1 against the pedestrian or the like is detected by the sensor, or in a case that the collision of the automobile 1 against the pedestrian or the like is predicted by the sensor, the power is distributed to the initiator 10 (ignition device) of each of the inflators 9 from the control circuit via the harness 50, on the basis of the detecting signal or the predicting signal. Thereby, each of the inflators 9 starts a gas-blowing out operation as described above, and the airbag 5 starts to be inflated by the gas from each of the inflators 9. The airbag 5 pushes open the lid and is developed along an outer surface of the vehicle body, as shown in Fig. 3.

Although the airbag apparatus 4 for protecting a pedestrian is installed outside of a vehicle interior, the initiator 10 of the inflator 9 mounted on the airbag apparatus 4 for protecting a pedestrian has a good waterproofing property between the electrode pin 22 and the harness 50, and since an intrusion of rain water or the like in between the same is prevented, weatherability of the initiator 10 is high.

In the aforementioned embodiment, the cap 60 is mounted in a manner so as to surround the joining body of the electrode pin 22 and the connector 51, and the sealing portion 61 is formed in the cap 60 by filling up the potting material up to that the connector 51 is completely buried. However, in the present invention, when at least the space between the connector 51 and the initiator main body 20 (between the connector 51 and the inner peripheral surface of the surrounding wall portion 33, in the aforementioned embodiment) is covered with the sealing portion 61, and preferably, when the joining portion of the connector 51 and the harness 50 (a base portion of the harness 50 to the connector 51) is further covered with the sealing portion 61, the waterproofing property is sufficiently secured. Therefore, it is not necessary to cover an entire connector 51 with the sealing portion 61.

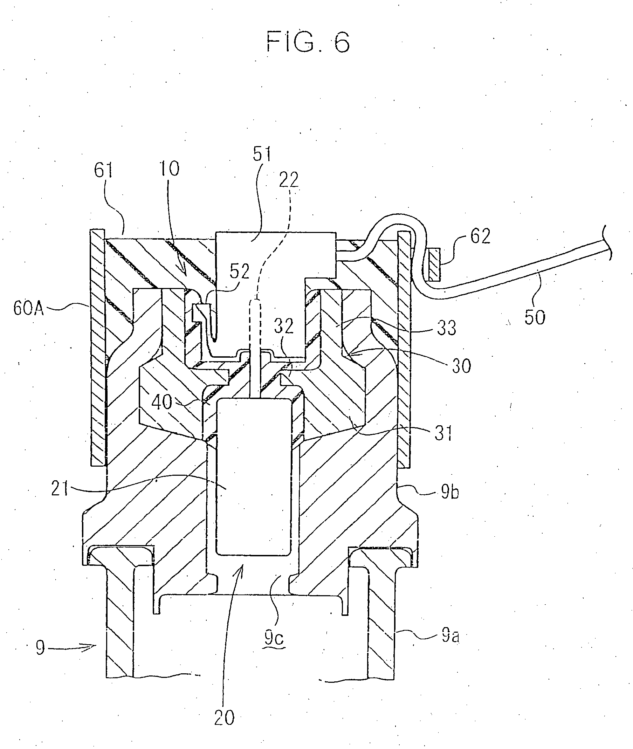

Fig. 6 is a cross-sectional view illustrating an initiator and a vicinity of an initiator-attaching portion of the inflator provided with the initiator according to another embodiment.

As shown in the drawing, in this embodiment, in forming the sealing portion 61 by mounting a cap 60A in a manner so as to surround the joining body of the electrode pin 22 and the connector 51, and by filling up the potting material in the cap 60A, the potting material is not filled up to that the entire connector 51 is buried in the potting material, but is filled up to a height of an extent that the base portion of the harness 50 to the connector 51 is submerged in the potting material.

In this case, although an upper part of the connector 51 is exposed outside of the sealing portion 61 formed with the potting material, a space between the connector 51 and the inner peripheral surface of the surrounding wall portion 33 is obstructed by the sealing portion 61, and the base portion of the harness 50 to the connector 51 is covered with the sealing portion 61 as described above, and therefore the waterproofing property is sufficiently secured.

In this embodiment, a hook-shaped hooking portion 62 is provided on an outer surface of the cap 60A. A halfway portion of the harness 50 that is pulled out of the cap 60A is hooked on the hooking portion 62. Incidentally, although the hooking portion 62 is integrally provided with the cap 60A in this embodiment, the same may be provided as a separate body from the cap 60A. Further, the hooking portion 62 is not limited to that having the hook-like shape and various constructions can be adopted therefor.

Thus, the hooking portion 62 is provided on the outer surface of the cap 60A, and the harness 50 is hooked to the hooking portion 62. Thereby, even when tensile force is exerted on the harness 50, the tensile force becomes hard to be transmitted to a portion in the harness 50 which is buried in the sealing portion 61 in the cap 60A, and the harness 50 can be prevented from being peeled off from the sealing portion 61, or the sealing portion 61 can be prevented from being ruptured by the tensile force.

Other construction of this embodiment is identical of that described above, and the same numerals as that in Figs. 1 and 2 are used to designate the same elements in Fig. 6, and explanation thereof is omitted.

The aforementioned embodiments describe examples of the present invention and the present invention is not limited to the aforementioned embodiments.

For example, a construction of a detail of the initiator 10 (shapes of the initiator main body 20 and the collar 30, a holding structure thereof, or the like) may be a construction other than that illustrated in the drawing.

An attaching structure of the initiator 10 to the inflator 9 may also be a construction other than that illustrated in the drawing.

In the aforementioned embodiments, although the cap 60 or 60A covers the initiator-attaching portion 9b of the inflator 9, the same may have a construction that covers only the joining body of the electrode pin 22 and the connector 51.

In the aforementioned embodiments, the cap 60 or the cap 60A that surrounds the joining body of the electrode pin 22 and the connector 51 is provided, and the sealing portion 61 is formed by filling up the potting material in the cap 60 or the cap 60A. However, the cap 60 or the cap 60A may be omitted, and the sealing portion 61 may be formed only at an important part, by directly applying a sealing material to at least a space between the connector 51 and the initiator main body 20, preferably, to the joining portion of the connector 51 and the harness 50 further, or like manner.

In the aforementioned embodiment, although the hooking portion 62 of the harness 50 is provided on the outer surface of the cap 60A surrounding the electrode pin 22 and the connector 51, the hooking portion 62 of the harness 50 may be provided on the top of the cap 60A or at an inner surface thereof. The hooking portion 62 of the harness 50 may be provided at a plurality of places in the cap 60A.

In the aforementioned embodiment, although the airbag apparatus is that for protecting a pedestrian, the airbag apparatus is not limited to that for protecting a pedestrian, and the present invention can be applied to various types of the airbag apparatuses, such as an airbag apparatus for protecting an occupant, which is installed in a vehicle interior, or the like.

## Claims

1. An initiator wherein a harness (50) for distributing power is connected to an initiator main body (20) via a connecting member (22, 51), comprising:
a sealing portion (61) for covering at least a joining portion of the connecting member (22, 51) and the initiator main body (20),
wherein the connecting member comprises an electrode (22) provided in the initiator main body (20) and a connector (51) wherein the harness (50) is continuing, and wherein the connector (51) is joined to the electrode (22), and wherein the sealing portion (61) is provided in a manner so as to cover at least a space between the connector (51) and the initiator main body (20),
wherein a cylindrically shaped cap (60; 60A) is provided in a manner so as to surround the joined electrode (22) and the connector (51), and the sealing portion (61) is provided inside of the cap (60; 60A),
**characterized in that**
the cap (60; 60A) is configured to be fitted onto an initiator-attaching portion (9b) of an inflator (9).

2. The initiator according to Claim 1, wherein at least the joining portion of the connecting member (22, 51) and the initiator main body (20), and a joining portion of the connecting member (22, 51) and the harness (50) are covered with the sealing portion (61).

3. The initiator according to Claim I or 2, wherein the sealing portion (61) is provided to cover at least a space between the connector (51) and the initiator main body (20), and the joining portion of the connector (51) and the harness (50).

4. The initiator according to any one of Claims 1-3, wherein the connector (51) is at least partially buried in the sealing portion (61).

5. The initiator according to any one of Claims 1-4, wherein a hooking portion (62), wherein a halfway portion in an extending direction of the harness (50) is hooked, is provided on the cap (60A).

6. The initiator according to any one of Claims 1-5, wherein the sealing portion (61) is formed of a potting material inserted into the cap (60; 60A).

7. An inflator provided with the initiator (10) according to any one of Claims 1 through 6.

8. An airbag apparatus comprising:
an airbag (5); and
an inflator (9) for inflating the airbag (5),
wherein the inflator (9) is the inflator according to Claim 7.

## Patentansprüche

1. Zünder, wobei ein Kabelstrang (50) zum Verteilen von Energie über ein Verbindungsteil (22, 51) mit einem Zünderhauptkörper (20) verbunden ist, umfassend:
einen Dichtungsabschnitt (61) zum Bedecken wenigstens eines Verbindungsabschnitts des Verbindungsteils (22, 51) und des Zünderhauptkörpers (20),
wobei das Verbindungsteil eine in dem Zünderhauptkörper (20) vorgesehene Elektrode (22) und einen Verbinder (51), in welchen sich der Kabelstrang (50) hinein erstreckt, umfasst, und wobei der Verbinder (51) mit der Elektrode (22) verbunden ist, und wobei der Dichtungsabschnitt (61) derart vorgesehen ist, dass er mindestens einen Zwischenraum zwischen dem Verbinder (51) und dem Zünderhauptkörper (20) bedeckt,
wobei eine zylinderförmige Kappe (60; 60A) derart vorgesehen ist, dass sie die verbundene Elektrode (22) und den Verbinder (51) umgibt und der Dichtungsabschnitt (61) innerhalb der Kappe (60; 60A) vorgesehen ist,
**dadurch gekennzeichnet,**
**dass** die Kappe (60; 60A) ausgestaltet ist, um auf einen Zünderbefestigungsabschnitt (9b) einer Aufblaseinrichtung (9) aufgesteckt zu werden.

2. Zünder nach Anspruch 1, wobei wenigstens der Verbindungsabschnitt des Verbindungsteils (22, 51) und des Zünderhauptkörpers (20) und ein Verbindungsabschnitt des Verbindungsteils (22, 51) und des Kabelstrangs (50) von dem Dichtungsabschnitt (61) bedeckt sind.

3. Zünder nach Anspruch 1 oder 2, wobei der Dichtungsabschnitt (61) derart vorgesehen ist, dass er mindestens einen Zwischenraum zwischen dem Verbinder (51) und dem Zünderhauptkörper (20) sowie den Verbindungsabschnitt des Verbinders (51) und des Kabelstrangs (50) bedeckt.

4. Zünder nach einem der Ansprüche 1-3, wobei der Verbinder (51) wenigstens teilweise in dem Dichtungsabschnitt (61) verborgen ist.

5. Zünder nach einem der Ansprüche 1-4, wobei ein Einhakungsabschnitt (62), an dem ein in Längsrichtung mittlerer Abschnitt des Kabelstrangs (50) eingehakt ist, auf der Kappe (60A) vorgesehen ist.

6. Zünder nach einem der Ansprüche 1-5, wobei der Dichtungsabschnitt (61) durch ein in die Kappe (60; 60A) eingefülltes Vergussmaterial gebildet ist.

7. Aufblaseinrichtung, welche mit dem Zünder (10) nach einem der Ansprüche 1-6 versehen ist.

8. Airbagvorrichtung umfassend:
einen Airbag (5); und
eine Aufblaseinrichtung (9) zum Aufblasen des Airbags (5),
wobei die Aufblaseinrichtung (9) die Aufblaseinrichtung nach Anspruch 7 ist.

## Revendications

1. Déclencheur dans lequel un faisceau de câbles (50) pour distribuer du courant est raccordé à un corps principal de déclencheur (20) via un élément de raccordement (22, 51), comprenant :
une partie d'étanchéité (61) pour recouvrir au moins une partie d'assemblage de l'élément de raccordement (22, 51) et le corps principal de déclencheur (20),
dans lequel l'élément de raccordement comprend une électrode (22) prévue dans le corps principal de déclencheur (20) et un connecteur (51), dans lequel le faisceau de câbles (50) continue, et dans lequel le connecteur (51) est assemblé à l'électrode (22), et dans lequel la partie d'étanchéité (61) est prévue afin de recouvrir au moins un espace entre le connecteur (51) et le corps principal de déclencheur (20),
dans lequel un capuchon de forme cylindrique (60 ; 60A) est prévu afin d'entourer l'électrode assemblée (22) et le connecteur (51), et la partie d'étanchéité (61) est prévue à l'intérieur du capuchon (60 ; 60A),
**caractérisé en ce que** :
le capuchon (60 ; 60A) est configuré pour être monté sur une partie de fixation du déclencheur (9b) d'un gonfleur (9).

2. Déclencheur selon la revendication 1, dans lequel au moins la partie d'assemblage de l'élément de raccordement (22, 51) et du corps principal de déclencheur (20) et une partie d'assemblage de l'élément de raccordement (22, 51) et du faisceau de câbles (50) sont recouvertes avec la partie d'étanchéité (61).

3. Déclencheur selon la revendication 1 ou 2, dans lequel la partie d'étanchéité (61) est prévue pour recouvrir au moins un espace entre le connecteur (51) et le corps principal de déclencheur (20) et la partie d'assemblage du connecteur (51) et du faisceau de câbles (50).

4. Déclencheur selon l'une quelconque des revendications 1 à 3, dans lequel le connecteur (51) est au moins partiellement enfoncé dans la partie d'étanchéité (61).

5. Déclencheur selon l'une quelconque des revendications 1 à 4, dans lequel une partie d'accrochage (62), dans laquelle est accrochée une partie centrale dans une direction d'extension du faisceau de câbles (50), est prévue sur le capuchon (60A).

6. Déclencheur selon l'une quelconque des revendications 1 à 5, dans lequel la partie d'étanchéité (61) est formée avec un matériau de remplissage inséré dans le capuchon (60 ; 60A).

7. Gonfleur doté du déclencheur (10) selon l'une quelconque des revendications 1 à 6.

8. Appareil de coussin de sécurité gonflable comprenant :
un coussin de sécurité gonflable (5) ; et
un gonfleur (9) pour gonfler le coussin de sécurité gonflable (5),
dans lequel le gonfleur (9) est le gonfleur selon la revendication 7.
